# EUROPÄISCHE PATENTSCHRIFT

(11) **EP 2 886 935 B1**
(45) Veröffentlichungstag und Bekanntmachung des Hinweises auf die Patenterteilung: **14.12.2016**
(21) Anmeldenummer: 14401101.2
(22) Anmeldetag: 30.10.2014
(51) Int. Cl.: F21S 8/02, F21V 15/01, F21V 27/02, F21V 21/04

(54) **Einbaugehäuse für elektrische Leuchten**
Recessed housing for electrical lights
Boîtier encastré pour dispositifs d'éclairage électriques

(30) Priorität: 08.11.2013 DE 102013112305
(43) Veröffentlichungstag der Anmeldung: 24.06.2015
(60) Teilanmeldung: 15199864.8
(73) Patentinhaber: Kaiser GmbH & Co. KG, 58579 Schalksmühle (DE)
(72) Erfinder: Siebeking, Thomas, 58513 Lüdenscheid (DE)
(74) Vertreter: Köchling, Conrad-Joachim

(56) Entgegenhaltungen:
- EP-A2- 0 455 466
- WO-A1-2008/061082
- DE-A1- 4 338 841

## Beschreibung

Die Erfindung betrifft ein Einbaugehäuse für elektrotechnische Einbauten und Leuchten zum Einbau im Leichtbauhohldecken oder -wände, wobei diese eine dem Querschnitt des Einbaugehäuses angepasste Einbauöffnung aufweisen, in die das Einbaugehäuse einsetzbar ist, wobei das Einbaugehäuse einen Boden und eine vom Boden abragende umlaufende Wandung aufweist, wobei mindestens die umlaufende Wandung aus elastischem elastomerem oder thermoplastischem Kunststoff besteht.

Einbaugehäuse zum Einbau in Leichtbaudecken oder Hohldecken sind im Stand der Technik vielfach bekannt. Zum Einbau werden die entsprechenden Decken-oder Wandbereiche mit einer ausreichend bemessenen Lochung versehen. In diese Lochung kann dann von der Außenseite her ein entsprechendes Einbaugehäuse eingesetzt werden, welches üblicherweise mit Spreizklammern oder Haltemitteln ausgestattet ist, damit das Gehäuse in der Einbausituation beispielsweise von hinten gegen den Wandausschnitt angespannt und in dieser Weise fixiert werden kann.

Aus der DE 43 38 841 A1 ist ein Einbaugehäuse bekannt, welches aus einem gummielastischen Werkstoff besteht, um einen für eine Befestigung in einem Decken- oder Wandausschnitt ausreichenden Reibschluss zu erzeugen.

Aus der WO 2008/061082A1 ist ein Einbaugehäuse aus Metall oder Kunststoff mit guten Wärmeleiteigenschaften bekannt, welches zur Wärmeabfuhr mit äußeren Rippen versehen ist.

Ausgehend von diesem Stand der Technik liegt der Erfindung die Aufgabe zugrunde, ein Einbaugehäuse gattungsgemäßer Art zu schaffen, welches in einfacher Weise und ohne zusätzliche Befestigungselemente montiert werden kann und in welchem in einfacher Weise elektrische Einbauten, insbesondere Leuchten mittels Federn oder dergleichen montiert und fixiert werden können, wobei das Gehäuse bei Belastungen in axialer Richtung formhaltig sein soll.

Zur Lösung dieser Aufgabe schlägt die Erfindung vor, dass die Wandung im Wesentlichen parallel zu einer Mittellängsachse des Einbaugehäuses ausgerichtete Stege aus formstabilem, thermoplastischem oder duroplastischem Kunststoff aufweist, die in Umfangsrichtung der Wandung voneinander beabstandet sind.

Unter dem Begriff "elastischer Kunststoff" sind Elastomere bzw. Thermoelaste zu verstehen. Unter dem Begriff formstabiler Kunststoff sind insbesondere Thermoplaste und Duroplaste zu verstehen.

Durch die erfindungsgemäße Ausgestaltung ist es in einfacher Weise möglich, ein solches Einbaugehäuse in die Einbauöffnung in der Wand oder Decke einzusetzen, indem das Einbaugehäuse in die entsprechende Einbauöffnung von der Außenseite her eingeschoben wird. Aufgrund der Elastizität des Einbaugehäuses wird dieses beim Einbau in die entsprechende Einbauöffnung in Querrichtung bzw. bei zylindrischen Einbaugehäusen in radialer Richtung zusammengedrückt. In der Sollposition spreizt sich das Einbaugehäuse entsprechend der vorgewählten Form auf, so dass es kraftschlüssig fest in der Lochlaibung der Einbauöffnung sitzt. Durch die im Wesentlichen parallel zur Mittellängsachse des Einbaugehäuses ausgerichteten Stege aus formstabilem Kunststoff wird erreicht, dass das Gehäuse beim Einbau in axialer Richtung nicht oder nur unwesentlich verformt wird. Dies ist besonders deswegen von Bedeutung, weil bei Hohldecken oder dergleichen hinter der Deckenfläche, die die Einbauöffnung aufweist, Matten aus Isolierstoff und Folien als Dampfsperre angeordnet sind, die beim Einbau des Einbaugehäuses von diesem in den Raum hinter der Wand oder Decke weggedrängt werden. Dadurch, dass das Einbaugehäuse die Stege aus formstabilem Kunststoff aufweist, ist es trotz dieser Belastung formhaltig und wird nicht in axialer Richtung zusammengedrückt, sodass der gewünschte Einbauraum innerhalb des Einbaugehäuses in jedem Falle sichergestellt ist.

Dadurch, dass die Wandung des Einbaugehäuses zum größten Teil aus elastischem Kunststoff besteht, ist es möglich, elektrotechnische Einbauten, insbesondere Leuchten, die mit Haltefedern ausgestattet sind, um sich an dem Innenmantel des Einbaugehäuses abstützen zu können, sicher zu positionieren und auch nach dem Einbau einen Beibehalt der Montagelage sicherzustellen, weil die Federn sich an dem elastischen Kunststoffmaterial abstützen und dabei das Gehäuse unter Umständen auch geringfügig in Querrichtung verformt wird, sodass ein sicherer Sitz der Elemente ineinander gewährleistet ist. Zudem wird durch die erfindungsgemäße Ausgestaltung erreicht, dass die Einbauten, die in dem Einbaugehäuse vorgesehen sind, nicht von Schmutzpartikeln oder Staub verunreinigt werden können, die bzw. der sich im Deckenhohlraum hinter der Decken- oder Wandfläche befinden.

Bevorzugt ist dabei vorgesehen, dass die Stege schmaler sind als die zwischen den Stegen verbleibenden Bereiche der Wandung aus elastischem elastomeren oder thermoelastischem Kunststoff.

Auf diese Weise ist sichergestellt, dass die Wesentlichen Wandungsbereiche des Einbaugehäuses aus elastischem Kunststoff bestehen und nur schmale Bereiche, die durch die Stege gebildet sind, aus formstabilem Kunststoff bestehen.

Bevorzugt ist zudem vorgesehen, dass die dem Boden abgewandte Mündung des Einbaugehäuses einen über den Dosenmantel vorragenden Kragen aus formstabilem thermoplastischem oder duroplastischem Kunststoff aufweist.

Diese Ausgestaltung dient dazu, dass das Einbaugehäuse beim Einschieben in die entsprechende Einbauöffnung nicht zu weit eingeschoben werden kann. Der vorragende Kragen aus formstabilem Kunststoff bildet einen Einsteckbegrenzungsanschlag. Da die Einbauöffnung üblicher Weise mit einem Standardfräswerkzeug erzeugt wird, welches ein Randversenk an der Öffnung bildet, ist in der Einbausolllage auch sichergestellt, dass das Einbaugehäuse nicht über die Wandfläche vorragt, weil der vorragende Kragen im Randversenk der Öffnung angeordnet ist.

Hierdurch entfällt eine Nacharbeit, und es entfällt auch die Notwendigkeit eventuell Dekorringe oder dergleichen zur Abdeckung eines Öffnungsspaltes vorzusehen.

Zudem kann auch vorgesehen sein, der Kragen mit einem Ringkörper aus formstabilen thermoplastischem oder duroplastischem Kunststoff ausgebildet ist, der mündungsseitig in die umlaufende Wandung des Einbaugehäuses eingebettet ist.

Hierdurch werden die Stabilität des Kragens und die Stabilität der Dosenmündung verbessert.

Vorzugsweise ist dabei vorgesehen, dass der Kragen einstückig an die Stege angeformt ist.

Ein solches Einbaugehäuse kann beispielsweise als zweikomponentiges Kunststoffelement in Kunststoffwerkzeugen gespritzt werden, wobei der Kragen einstückig an die Stege angeformt ist und beispielsweise zunächst die Hartkomponente im Wege des Spritzgießens erzeugt wird und anschließend im gleichen Werkzeug die elastische Komponente aufgeformt wird. Es ist aber auch denkbar, die Elemente aus zwei ineinander setzbaren Bauteilen zusammenzufügen, wobei das eine Bauteil beispielsweise den Kragen samt Ringkörper und die Stege beinhaltet, während das andere Element ein Dosenkörper mit Boden und umlaufender Wand aus elastischem Werkstoff ist.

Dieser elastische Körper kann auf die Bestandteile aus hartem Kunststoff aufgeschoben werden oder es können auch die Bestandteile aus hartem Kunststoff auf den Formkörper aus elastischem Kunststoff aufgeschoben werden. Somit ist dann das Einbaugehäuse fertig gestellt.

Um eine gute Abdichtung des Einbaugehäuses relativ zur Einbauöffnung in der entsprechenden Wand- oder Deckenfläche zu erreichen, ist vorgesehen, dass nahe der Mündung des Einbaugehäuses oder unmittelbar an die Mündung anschließend außen umlaufend des Mantels des Einbaugehäuses eine oder mehrere voneinander beabstandete Dichtungsrippen aus elastischem elastomerem oder thermoelastischem Werkstoff ausgebildet sind.

In der Einbausolllage liegen mindestens einige der Dichtungsrippen an der Laibung der Einbauöffnung an und sorgen somit für einen sicheren und dichten Halt des Einbaugehäuses in der Einbauöffnung.

Vorzugsweise ist dabei vorgesehen, dass die Dichtungsrippen unterschiedliche Außendurchmesser aufweisen und/oder in unterschiedlichem Abstand voneinander auf dem Mantel des Einbaugehäuses ausgebildet sind.

Um unterschiedliche Abstände ausgleichen zu können und eine vorzügliche Dichtung sicherzustellen, können die Dichtungsrippen unterschiedlich weit über den Mantel der Dose vorragen und/oder auch in unterschiedlichem Abstand voneinander auf den Mantel des Einbaugehäuses ausgebildet sein.

Um es zu, ermöglichen, dass in ein solches Einbaugehäuse eine Leuchte auch in einer Schrägstellung eingebaut werden kann, ist vorgesehen, dass das Einbaugehäuse in seiner Wandung zwischen zwei Stegen eine Ausbuchtung aufweist, die einen Montagefreiraum für ein schräg in das Gehäuse eingesetztes elektrisches Einbauteil oder eine Leuchte bildet.

Diese Ausgestaltung ermöglicht es, ein in das Gehäuse eingesetztes elektrisches Bauteil, insbesondere eine Leuchte, in Schrägstellung innerhalb des Gehäuses anzuordnen, weil hierzu der Montagefreiraum ausgebildet ist.

Um auch eine abgedichtete Kabeleinführung durch die Wandung des Einbaugehäuses zu ermöglichen ist vorgesehen, dass das Einbaugehäuse in seiner Wandung zwischen zwei benachbarten Stegen eine Kabeleinlassöffnung aufweist, in die ein Dichtstopfen aus elastischem Kunststoff passend eingesetzt ist, der einen Schlitz als Kabeldurchführung aufweist.

Diese Anordnung ermöglicht es, ein Kabel ggf. samt Stecker durch die Kabeleinlassöffnung in das Gehäuseinnere einzuführen. Der Dichtstopfen aus elastischem Material kann dann auf den Kabelmantel aufgesetzt und in die Kabeleinlassöffnung des Gehäuses eingedrückt werden, sodass eine abgedichtete Kabeldurchführung erreicht ist.

Bevorzugt ist dabei vorgesehen, dass die Kabeleinlassöffnung von zwei langen zueinander parallelen Randkanten und zwei diese verbindenden kurzen Randkanten begrenzt ist, wobei die langen Randkanten parallel zu den Stegen verlaufen, zwischen welchen die Kabeleinlassöffnung ausgebildet ist, und wobei der Schlitz des Dichtstopfens in Montagesolllage parallel zu den Stegen verläuft.

Hierdurch wird sichergestellt, dass in der Einbausolllage durch die langen Randkanten und die zu diesen benachbarten Stege ausreichende quer gerichtete Druckkräfte auf die Bestandteile des Dichtstopfens ausgeübt wird, sodass dieser das durchgeführte Kabel dicht umfassen kann und dicht in die entsprechende Kabeleinlassöffnung eingesteckt werden kann.

Es wird hierdurch eine quasi luftdichte Leitungseinführung auch bei Einsatz von konfektionierten Kabeln, also Kabeln mit Steckverbindern, erreicht, wobei durch die elastische Ausbildung des Dichtstopfens eine Anpassung an unterschiedliche Kabelquerschnitte erreicht wird.

Ein Ausführungsbeispiel der Erfindung ist in der Zeichnung dargestellt und im Folgenden näher beschrieben.

Es zeigt:
- Fig.1: ein erfindungsgemäßes Einbaugehäuse in Seitenansicht;
- Fig.2: das Gleiche in Draufsicht gesehen;
- Fig.3: eine Ansicht von schräg oben;
- Fig.4: eine Ansicht von unten in das Innere des Einbaugehäuses.

In den Zeichnungen ist ein Einbaugehäuse 1 für elektrotechnische Einbauten, insbesondere für Leuchten vorzugsweise LED Leuchten gezeigt. Solche Einbaugehäuse sind dazu bestimmt, in Leichtbaudecken oder Hohldecken eingebaut zu werden, wobei die entsprechende Decke eine dem Querschnitt des Einbaugehäuses 1 angepasste Einbauöffnung aufweist, in welche das Einbaugehäuse einsetzbar ist. Das Einbaugehäuse 1 weist einen Boden 2 und eine vom Boden abragende umlaufende Wandung auf. Erfindungsgemäß besteht mindestens die umlaufende Wandung 3 aus elastischen Kunststoff, beispielsweise thermoplastischem Elastomer, darüber hinaus weist aber die Wandung 3 im Wesentlichen parallel zur einer Mittellängsachse des Einbaugehäuses 1 gerichtete Stege 4 aus formstabilem Kunststoff beispielsweise Polypropylen oder Polyamid auf, die in Umfangsrichtung der Wandung 3 voneinander beabstandet sind. Beispielsweise können auf den Umfang der Wandung verteilt etwa 12 solcher Stege 4 angeordnet sein. Die Stege 4 sind wesentlich schmaler als die zwischen den Stegen 4 verbleibenden Bereiche der Wandung 3 aus elastischem Kunststoff. Die dem Boden 2 abgewandte Mündung des Einbaugehäuses 1 weist einen über den Dosenmantel nach außen vorragenden Kragen 5 ebenfalls aus formstabilen Kunststoff auf. Dieser Kragen dient als Einsteckbegrenzung beim Montieren in der entsprechenden Einbauöffnung und sorgt für Formhaltigkeit des Einbaugehäuses 1 in der Montagesolllage. Der Kragen 5 kann mit einem Ringkörper kombiniert sein, der ebenfalls aus formstabilem Kunststoff ausgebildet ist und mündungsseitig in die umlaufende Wandung des Einbaugehäuses 1 eingebettet ist. Vorzugsweise ist der Kragen 5 einstückig an die Stege 4 angeformt.

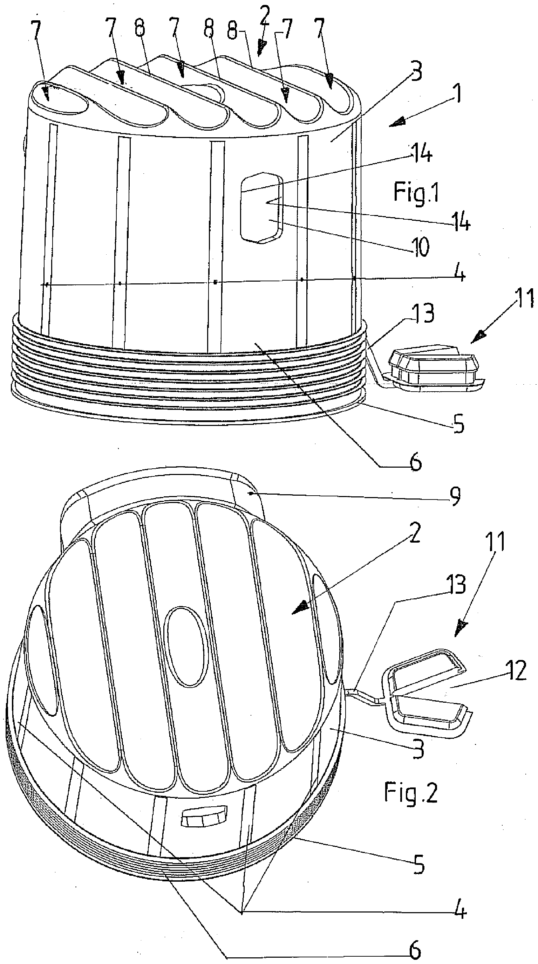

Nahe der Mündung des Einbaugehäuses 1 oder unmittelbar an dessen Mündung anschließend sind außen umlaufend des Mantels des Einbaugehäuses eine Vielzahl voneinander benachbarten Dichtungsrippen 6 aus elastischem Kunststoff ausgebildet und aufgeformt. Die Dichtungsrippen 6 können unterschiedliche Außendurchmesser aufweisen oder auch in unterschiedlichem Abstand voneinander auf den Mantel des Einbaugehäuses 1 ausgebildet sein. Eine besonders bevorzugte Weiterbildung und Ausgestaltung besteht darin, dass der Boden 2 auf seiner dem Inneren des Einbaugehäuses 1 abgewandten Fläche Rippenstrukturen oder Wellenstrukturen 7 aufweist, die zur Seitenfläche des Einbaugehäuses 1 offen ausmündende Endbereiche bilden. Dies ist besonders gut in Figur 1 ersichtlich. Diese Rippenstrukturen oder Wellenstrukturen 7 sind aus einer Vielzahl von parallel zueinander ausgerichteten Rippen oder Wellen gebildet, wobei die Wellenstrukturen 7 breite Wellentäler bilden und die vom Boden abragenden Wellenberge 8 gegenüber den dazwischen liegenden Wellentälern schmale Bereiche sind. Diese über den Boden 2 vorragenden Endbereiche der Rippenstrukturen oder Wellenstrukturen 7 sind unter Vermeidung scharfer Kanten gerundet. Ebenso ist der Übergangsbereich vom Boden 2 in die Wandung 3 gerundet. Kanten, insbesondere scharfe Kanten sind hierbei vermieden.

Der Boden 2 kann vollständig oder teilweise mindestens im Bereich der vorragenden Stege oder Wellenberge 8 der Rippenstrukturen oder Wellenstrukturen 7 aus formstabilem Kunststoff bestehen. Auch ist es möglich, den Boden außenseitig mit einer Schicht von elastischem Kunststoff zu überziehen. Auch ist es möglich, den Boden 2 vollständig oder teilweise aus elastischem Kunststoff zu fertigen, wobei vorzugsweise in diesem Falle in den Boden 2 die vorragenden Stege oder Wellenberge 8 der Rippenstrukturen oder Wellenstrukturen 7 aus formstabilen Kunststoff eingebettet sind.

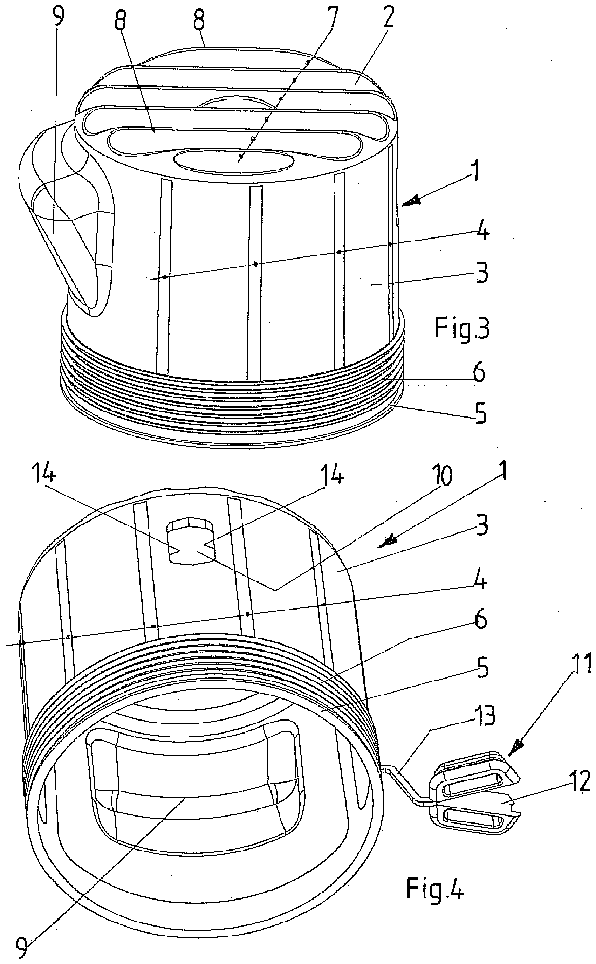

Wie besonders gut in Figur 2 bis 4 ersichtlich, weist das Einbaugehäuse 1 in seiner Wandung 3 zwischen zwei Stegen 4 eine Ausbuchtung 9 auf, die einen Montagefreiraum bildet, in den ein schräg in das Gehäuse 1 eingebautes Einbauteil beispielsweise eine Leuchte eingesetzt werden kann, sodass die Leuchtenaustrittsfläche nicht parallel zur Mündung des Einbaugehäuses ausgerichtet ist, sondern in einem Winkel hierzu.

Des Weiteren weist das Einbaugehäuse 1 in seiner Wandung 3 zwischen zwei benachbarten Stegen 4 eine Kabeleinlassöffnung 10 auf, in die ein Dichtstopfen 11 aus elastischem Kunststoff passend einsetzbar ist, der einen Schlitz 12 als Kabeldurchführung aufweist. Im Ausführungsbeispiel ist der Dichtstopfen 11 über einen Materialsteg 13 an die Dichtungsrippen 6 angespritzt. Zur Benutzung kann dieser Steg 13 durchtrennt werden, sodass dann der Dichtstopfen 11 in die Kabeleinlassöffnung 10 eingedrückt werden kann.

Die Kabeleinlassöffnung 10 ist von zwei langen, zueinander parallelen Randkanten 14 begrenzt sowie von einer oberen und unteren Kante, wie in Figur 1 ersichtlich ist. Die langen Randkanten 14 verlaufen parallel zu den benachbarten Stegen 4, zwischen welchen die Kabeleinlassöffnung 10 ausgebildet ist, wobei in der Montagesolllage der Schlitz 12 des Dichtstopfens 11 parallel zu den Stegen 4 ausgerichtet ist. Hierdurch wird erreicht, dass in der Montagesolllage ausreichende Druckkräfte auf den elastischen Dichtstopfen 11 quer zum Verlauf des Längsschlitzes 12 ausgeübt werden, sodass eine vorzügliche Abdichtung des durchgeführten Kabels erreicht wird.

Die Erfindung ist im Übrigen nicht auf das Ausführungsbeispiel beschränkt, sondern im Rahmen der Offenbarung vielfach variabel.

## Patentansprüche

1. Einbaugehäuse (1) für elektrotechnische Einbauten und Leuchten zum Einbau im Leichtbauhohldecken oder -wände, wobei diese eine dem Querschnitt des Einbaugehäuses (1) angepasste Einbauöffnung aufweisen, in die das Einbaugehäuse (1) einsetzbar ist, wobei das Einbaugehäuse (1) einen Boden (2) und eine vom Boden (2) abragende umlaufende Wandung (3) aufweist, wobei mindestens die umlaufende Wandung (3) aus elastischem elastomerem oder thermoelastischem Kunststoff besteht, **dadurch gekennzeichnet, dass** die Wandung (3) im Wesentlichen parallel zu einer Mittellängsachse des Einbaugehäuses (1) ausgerichtete Stege (4) aus formstabilem thermoplastischem oder duroplastischem Kunststoff aufweist, die in Umfangsrichtung der Wandung (3) voneinander beabstandet sind.

2. Einbaugehäuse nach Anspruch 1, **dadurch gekennzeichnet, dass** die Stege (4) schmaler sind als die zwischen den Stegen (4) verbleibenden Bereiche der Wandung (3) aus elastischem elastomerem oder thermoplastischem Kunststoff.

3. Einbaugehäuse nach Anspruch 1 oder 2, **dadurch gekennzeichnet, dass** die dem Boden (2) abgewandte Mündung des Einbaugehäuses (1) einen über den Dosenmantel nach außen vorragenden Kragen (5) aus formstabilem thermoplastischem oder duroplastischem Kunststoff aufweist.

4. Einbaugehäuse nach Anspruch 3, **dadurch gekennzeichnet, dass** der Kragen (5) mit einem Ringkörper aus formstabilen thermoplastischem oder duroplastischem Kunststoff ausgebildet ist, der mündungsseitig in die umlaufende Wandung (3) des Einbaugehäuses (1) eingebettet ist.

5. Einbaugehäuse nach Anspruch 3 oder Anspruch 4, **dadurch gekennzeichnet, dass** der Kragen (5) einstückig an die Stege (4) angeformt ist.

6. Einbaugehäuse nach einem der Ansprüche 1 bis 5, **dadurch gekennzeichnet, dass** nahe der Mündung des Einbaugehäuses (1) oder unmittelbar an die Mündung anschließend außen umlaufend des Mantels (3) des Einbaugehäuses (1) eine oder mehrere voneinander beabstandete Dichtungsrippen (6) aus elastischem elastomerem oder thermoelastischem Werkstoff ausgebildet sind.

7. Einbaugehäuse nach Anspruch 6, **dadurch gekennzeichnet, dass** die Dichtungsrippen (6) unterschiedliche Außendurchmesser aufweisen und/oder in unterschiedlichem Abstand voneinander auf dem Mantel (3) des Einbaugehäuses (1) ausgebildet sind.

8. Einbaugehäuse nach einem der Ansprüche 1 bis 7, **dadurch gekennzeichnet, dass** das Einbaugehäuse (1) in seiner Wandung zwischen zwei Stegen (4) eine Ausbuchtung (9) aufweist, die einen Montagefreiraum für ein schräg in das Gehäuse eingesetztes elektrisches Einbauteil oder eine Leuchte bildet.

9. Einbaugehäuse nach einem der Ansprüche 1 bis 8, **dadurch gekennzeichnet, dass** das Einbaugehäuse (1) in seiner Wandung (3) zwischen zwei benachbarten Stegen (4) eine Kabeleinlassöffnung (10) aufweist, in die ein Dichtstopfen (11) aus elastischem elastomerem oder thermoplastischem Kunststoff passend eingesetzt ist, der einen Schlitz (12) als Kabeldurchführung aufweist.

10. Einbaugehäuse nach Anspruch 9, **dadurch gekennzeichnet, dass** die Kabeleinlassöffnung (10) von zwei langen zueinander parallelen Randkanten (14) und zwei diese verbindenden kurzen Randkanten begrenzt ist, wobei die langen Randkanten (14) parallel zu den Stegen (4) verlaufen, zwischen welchen die Kabeleinlassöffnung (10) ausgebildet ist, und wobei der Schlitz (12) des Dichtstopfens (11) in Montagesolllage parallel zu den Stegen (4) verläuft.

## Claims

1. An installation housing (1) for electrical installations and lights for installation in lightweight hollow ceilings or walls having an installation opening adapted to the cross section of the installation housing (1), into said installation opening the installation housing (1) being insertable, the installation housing (1) including a bottom (2) and a circumferential wall (3) protruding from the bottom (2), at least the circumferential wall (3) being made from an elastic elastomeric or thermoelastic plastic material, **characterized by** that the wall (3) includes webs (4) oriented substantially in parallel to a longitudinal central axis of the installation housing (1) made of a form-stable thermoplastic or thermosetting plastic material, said webs being spaced to each other in the peripheral direction of the wall (3).

2. The installation housing according to claim 1, **characterized by** that the webs (4) are narrower than the sections of the wall (3) made of an elastic elastomeric or thermoplastic plastic material remaining between the webs (4).

3. The installation housing according to claim 1 or 2, **characterized by** that the orifice of the installation housing (1) showing away from the bottom (2) includes a collar (5) made of a form-stable thermoplastic or thermosetting plastic material outwardly protruding beyond the box shell.

4. The installation housing according to claim 3, **characterized by** that the collar (5) is formed with an annular body made of a form-stable thermoplastic or thermosetting plastic material that is embedded, on the side of the orifice, in the circumferential wall (3) of the installation housing (1).

5. The installation housing according to claim 3 or claim 4, **characterized by** that the collar (5) is formed as one piece at the webs (4).

6. The installation housing according to one of claims 1 to 5, **characterized by** that close to the orifice of the installation housing (1) or immediately following the orifice on the outside of the shell (3) of the installation housing (1), one or more spaced sealing ribs (6) made of an elastic elastomeric or thermoelastic material are formed.

7. The installation housing according to claim 6, **characterized by** that the sealing ribs (6) have different outer diameters and/or are arranged in different distances to each other on the shell (3) of the installation housing (1).

8. The installation housing according to one of claims 1 to 7, **characterized by** that the installation housing (1) includes in its wall between two webs (4), a bulge (9) that forms a free mounting space for an electrical installation piece obliquely inserted into the housing or a light.

9. The installation housing according to one of claims 1 to 8, **characterized by** that the installation housing (1) includes, in its wall (3) between two adjacent webs (4), a cable inlet opening (10) into which a sealing plug (11) made of an elastic elastomeric or thermoplastic plastic material is inserted in a fitting manner, said sealing plug including a slot (12) as a cable passage.

10. The installation housing according to claim 9, **characterized by** that the cable inlet opening (10) is limited by two long mutually parallel border edges (14) and two short border edges connecting the latter, the long border edges (14) extending in parallel to the webs (4), between which the cable inlet opening (10) is formed, and the slot (12) of the sealing plug (11), in the intended mounting position, extending in parallel to the webs (4).

## Revendications

1. Boîtier encastrable (1) pour des équipements électriques et luminaires pour la mise en place dans des plafonds creux ou parois creuses à faible poids ayant une ouverture d'encastrement adaptée à la section du boîtier encastrable (1), dans cette ouverture d'encastrement le boîtier encastrable (1) pouvant être engagé, le boîtier encastrable (1) comportant un fond (2) et une paroi circonférentielle (3) faisant saillie sur le fond (2), au moins la paroi circonférentielle (3) étant en un matériau plastique élastique élastomérique ou thermoélastique, **caractérisé en ce que** la paroi (3) comporte des entretoises (4) orientées essentiellement en parallèle à un axe central longitudinal du boîtier encastrable (1) en un matériau plastique thermoplastique ou thermodurcissable sous forme stable, ces entretoises étant espacées dans la direction périphérique de la paroi (3).

2. Boîtier encastrable selon la revendication 1, **caractérisé en ce que** les entretoises (4) sont plus étroites que les parties de la paroi (3) en un matériau plastique élastique élastomérique ou thermoplastique restantes entre les entretoises (4).

3. Boîtier encastrable selon la revendication 1 ou 2, **caractérisé en ce que** l'embouchure du boîtier encastrable (1) opposée au fond (2) comporte une collerette (5) en un matériau plastique thermoplastique ou thermodurcissable sous forme stable faisant saillie vers l'extérieur au-delà de l'enveloppe de la boîte.

4. Boîtier encastrable selon la revendication 3, **caractérisé en ce que** la collerette (5) est réalisée avec un corps annulaire en un matériau plastique thermoplastique ou thermodurcissable sous forme stable qui est monté, au côté de l'embouchure, dans la paroi circonférentielle (3) du boîtier encastrable (1).

5. Boîtier encastrable selon la revendication 3 ou claim 4, **caractérisé en ce que** la collerette (5) est constituée en une seule pièce aux entretoises (4).

6. Boîtier encastrable selon une des revendications 1 à 5, **caractérisé en ce que** proche de l'embouchure du boîtier encastrable (1) ou immédiatement voisin à l'embouchure à l'extérieur de l'enveloppe (3) du boîtier encastrable (1), une ou plusieurs nervures d'étanchéité (6) en un matériau élastique élastomérique ou thermoélastique sont formées.

7. Boîtier encastrable selon la revendication 6, **caractérisé en ce que** les nervures d'étanchéité (6) ont des diamètres extérieurs différents et/ou sont arrangées à des distances différentes entre elles sur l'enveloppe (3) du boîtier encastrable (1).

8. Boîtier encastrable selon une des revendications 1 à 7, **caractérisé en ce que** le boîtier encastrable (1) comporte, sur sa paroi entre deux entretoises (4), un évidement (9) qui forme un espace de montage libre pour une pièce d'installation électrique obliquement insérée dans le boîtier ou un luminaire.

9. Boîtier encastrable selon une des revendications 1 à 8, **caractérisé en ce que** le boîtier encastrable (1) comporte, sur sa paroi (3) entre deux entretoises (4) voisines, une ouverture d'entrée de câble (10) dans laquelle un bouchon d'étanchéité (11) en un matériau plastique élastique élastomérique ou thermoplastique est inséré de manière ajustée, ce bouchon d'étanchéité comportant une fente (12) comme passage de câble.

10. Boîtier encastrable selon la revendication 9, **caractérisé en ce que** l'ouverture d'entrée de câble (10) est délimitée par deux bords longs (14) parallèles et deux bords courts liant ceux-ci, les bords longs (14) s'étendant en parallèle aux entretoises (4), entre lesquelles l'ouverture d'entrée de câble (10) est formée, et la fente (12) du bouchon d'étanchéité (11), dans la position de montage de consigne, s'étendant en parallèle aux entretoises (4).
